# EUROPEAN PATENT SPECIFICATION

(11) **EP 2 387 680 B1**
(45) Date of publication and mention of the grant of the patent: **16.12.2015**
(21) Application number: 10703221.1
(22) Date of filing: 18.01.2010
(51) Int. Cl.: F16L 3/10, F16L 55/035

(54) **CLIP**
KLEMME
AGRAFE

(30) Priority: 19.01.2009 DE 102009005422
(43) Date of publication of application: 23.11.2011
(73) Proprietor: Newfrey LLC, Newark, Delaware 19711 (US)
(72) Inventor: STIGLER, Mario, 35394 Giessen (DE); ALBACH, Jens, 35394 Giessen (DE); HANFT, Matthias, 35394 Giessen (DE); ROSEMANN, Frank, 35394 Giessen (DE)
(74) Representative: Witte, Weller & Partner Patentanwälte mbB
(86) International application number: PCT/EP2010/000245
(87) International publication number: WO 2010/081735

(56) References cited:
- WO-A2-01/41276
- GB-A- 2 133 072
- US-A- 4 189 807
- US-A- 5 702 076

## Description

The present invention relates to a clip for fastening an article on a workpiece, having a basic body which is made of a relatively hard plastic material and has an accommodating portion, in which the article can be accommodated along a longitudinal axis, and a fastening portion, by means of which the basic body can be fastened on the workpiece, and having means for damping the transmission of vibrations between the article and the basic body.

Such a clip is known from WO 02/079682 A1. In the case of the clip disclosed in the latter document, an elastically deformable retaining element made of a relatively soft plastic material is inserted in the accommodating portion of the basic body. The retaining element defines an interior for accommodating an article such as a tube, the interior being formed by a plurality of radially inwardly projecting noses of the retaining element. In this way, the article does not come into contact with the relatively hard plastic material, in which case vibrations between the article and the basic body are damped by the elastic retaining element.

Accordingly, it is possible to damp vibrations which propagate from the workpiece to the article or vice versa.

Such clips are widely used in the automotive industry, the fastening portion often having a stud holder in order for it to be possible for the clip to be secured on a stud which projects in relation to a surface of the workpiece.

The stud may be welded onto the workpiece, such as a bodywork panel of a motor vehicle, for example by so-called stud welding. As an alternative to this, it is possible for the stud to be adhesively bonded to a workpiece or to form a thermoplastic weld connection to a thermoplastic workpiece.

The clips serve, for example, for mounting tubes and lines, such as petrol-feed lines or electric cables, on the vehicle bodywork.

The vibrations which have to be damped arise, for example, on account of oscillations produced when the vehicle is in motion (by braking, by engine vibrations or resonance, etc.). If a fastened article oscillates or vibrates, on the one hand the vibration-damping means are intended to prevent the clip from becoming detached from the workpiece. On the other hand, the articles have to be fixed and retained on a permanent basis despite such oscillations.

Although the prior-art clip described above does perform the vibration-damping function well, it requires a large amount of installation space and involves high outlay to produce since it is made from two different materials.

A clip according to the preamble of claim 1 is known from document GB 2 133 072 A.

Accordingly, it is an object of the invention to specify an improved clip for fastening an article on a workpiece.

This object is achieved by a clip of claim 1, wherein the vibration-damping means have at least two first tongues which extend from the accommodating portion in a longitudinal direction, taper conically towards one another and are designed to be elastically deformable in the radial direction such that the accommodated article is retained by ends of the tongues.

In the case of the clip according to the invention, it is possible to damp vibrations via the elastically deformable tongues. The latter may be produced from the same plastic material as the basic body, in which case the clip can be produced at lower costs.

In addition, the clip according to the invention requires less installation space than prior-art clips.

Preferably, the clip has a basic body which is made of a relatively hard plastic material and has an accommodating portion, in which the article can be accommodated along a longitudinal axes, and a fastening portion, by means of which the basic body can be fastened on the workpiece, wherein a retaining surface of the accommodating portion is at least partially coated with a rubber-type material.

The rubber-type material that is applied to the retaining surface of the accommodating portion has the advantage that the friction coefficient between the retaining surface of the accommodating portion of the clip and the article accommodated therein is increased.

Conclusively, the article is held more secure at the clip, and the tendency that the article is displaced against the clip due to vibrations or during transport is decreased.

Due to the rubber-type material coating, the clip can be a one-piece element of the relatively hard plastic material. It is not necessary to integrate into the clip a further element of a relatively soft plastic material, as is known in the prior art (wherein the additional soft plastic element might be mounted to the clip or integrated therewith by a 2K injection molding process which is slow and cost-intensive).

The rubber-type material can have the effect to damp vibrations.

Another advantage is that the rubber-type material coating does not have any negative effects on the mechanical characteristic and function of the basic body which is made of a relatively hard plastic material.

The clip can be manufactured on a standard injection molding machine that has a significantly shorter circle time than an 2K injection molding machine. The application of the rubber-type material to the retaining surface can be made online at the site of the injection molding machine, but can also be applied offline, either manually or in an automated fashion.

According to a particularly preferred embodiment of the invention, the vibration-damping means have at least two second tongues which extend from the accommodating portion in the opposite longitudinal direction, taper conically towards one another and are designed to be elastically deformable in the radial direction such that the article is retained by ends of the first and of the second tongues.

In the case of this embodiment, the article can be retained exclusively by such tongues, that is to say it is preferably not in contact with any other portions of the basic body, in which case good vibration damping can be realized.

Insofar as reference is made in the present context to conically extending tongues, this is intended to mean that they have an end which is adjacent to the accommodating portion and a free end, the spacing between the free end and the longitudinal axis being smaller than the spacing between the other end of the tongue and the longitudinal axis. In the region therebetween, the tongues may be of rectilinear design, but may also be of any desired curved shape.

According to a further preferred embodiment, the tongues are formed integrally with the basic body.

In the case of this embodiment, it is possible for the clip to comprise just a single part which, in addition, is formed from a single material, that is to say a relatively hard plastic material. The necessary elasticity for vibration-damping purposes can preferably be provided by the tongues being of a suitable length. The length of the first and of the second tongues may be, for example, greater in each case than the axial length of the basic body in the region of the accommodating portion.

Generally, the accommodating portion may be closed, in which case the article is introduced longitudinally into the clip.

According to the invention, however, the accommodating portion has a radial opening for the radial introduction of the article.

The operation of fitting the article can be simplified to a considerable extent as a result.

Furthermore, it is advantageous in particular here if the accommodating portion is designed such that it can be widened elastically at least in the region of its radial opening.

In the case of this embodiment, the article can be clipped into the accommodating portion, the radial opening, once restored elastically, engaging behind the article, in which case the latter is retained essentially in captive fashion on the clip. The retaining force here may be such that it is sufficient until such time as the article is secured definitively on the clip, for example by a cover, see below. As an alternative to this, it is also possible for this retaining force to be set such that the article is also secured permanently on the clip without a further fixing means being required.

Furthermore, it is preferred if the accommodating portion has at least one introduction slope in the region of a periphery of the radial opening.

This can facilitate to a considerable extent the operation of pushing the article in for the purpose of clipping it into the accommodating portion, in which case fitting is rendered more straightforward.

According to the invention, at least one tongue, adjacent to the radial opening, has an introduction slope.

Such an introduction slope on the tongue may be provided as an alternative or in addition to an introduction slope in the region of the accommodating portion and likewise serves to facilitate the operation of fitting the article.

It is particularly preferred here if the introduction slope on the tongue is arranged at the end of the tongue.

According to a further preferred embodiment, the tongue on which the introduction slope is formed is longer than the other tongue(s). Generally, it is possible for the tongues to be of different lengths and consequently to act on axially different points of the article. On the one hand, this can increase the stability of the mounting of the article on the clip. On the other hand, it is also possible to improve the securing action in relation to axial movements of the article in the clip.

Furthermore, it is advantageous overall if the clip has a cover, which can be connected to the basic body.

In this way, some of the functions of the basic body can be transferred to the cover. For example, the vibration means here may have a first tongue on the basic body and a further tongue on the clip, these tongues extending in the same longitudinal direction, tapering conically towards one another and being elastically deformable in the radial direction such that the accommodated article is retained by ends of these two tongues.

Furthermore, the cover may also have further functions.

It is thus preferred if the cover has a closure portion for closing a radial opening of the accommodating portion.

In the case of this embodiment, the cover serves for securing the article radially on the clip.

Furthermore, it is preferred here if at least one clip tongue extends in the longitudinal direction from the closure portion such that the article is retained by ends of the first tongue(s) and of the clip tongue.

The cover can preferably be connected to the basic body via latching means, in which case the cover can be fitted straightforwardly on the basic body.

Furthermore, the cover may be designed in the form of a separate part which is latched on a basic body which is, for example, already secured on a workpiece. As an alternative to this, the cover may also be formed integrally with the basic body, for example via a film hinge.

Furthermore, it is particularly preferable if the fastening portion has a stud holder for securing the basic body on a stud which projects in relation to a surface of the workpiece.

In a preferred embodiment of the invention, the rubber-type material is applied to an end of at least one of the tongues of the clip according to the first aspect of the invention.

In an embodiment of the invention, a retaining surface which contacts the article is formed by inner portions of the ends of the tongues. By applying the rubber-type material to these retaining surfaces, the retaining force can be increased due to the increase of the frictional coefficient.

In another preferred embodiment of the clip according to the invention, the rubber-type material is applied by dipping or by spraying or by depositing a dose of the material using a pipette.

Conclusively, the rubber-type material can be applied by a simple and cost-effective process. Particularly, the pipetting step can be used to apply the material to the ends of tongues of the clip.

The rubber-type material is preferably a material having a low viscosity when being applied. Typical examples for such materials are PUR, elastomeric materials, PVC, plastisoles, as well as physically or chemically curing adhesives. The viscosity of the rubber-type material at the time of applying it to the retaining surface is an important parameter. After applying the rubber-type material, and after waiting for a sufficient cross-linking time period, the rubber-type material coating is finalized and fixed to the retaining surface.

Of course, the features which have been mentioned above, and those which are yet to be explained hereinbelow, can be used not just in the combination specified in each case, but also in other combinations, or on their own, without departing from the framework of the present invention.

Exemplary embodiments of the invention will be explained in more detail in the following description and are illustrated in the drawing, in which:
- Fig. 1: shows a schematic view of a longitudinal section through a first embodiment of a clip not forming part of the invention;
- Fig. 2: shows a sectional view along line II-II from Fig. 1;
- Fig. 3: shows a perspective illustration of a further embodiment of a clip not forming part of the invention;
- Fig. 4: shows a front view of the clip from Fig. 3;
- Fig. 5: shows a side view of the clip from Fig. 3;
- Fig. 6: shows a plan view of the clip from Fig. 3;
- Fig. 7: shows a perspective illustration of an embodiment of a clip according to the invention;
- Fig. 8: shows a front view of the clip from Fig. 7; and
- Fig. 9: shows a detail IX from Fig. 8.

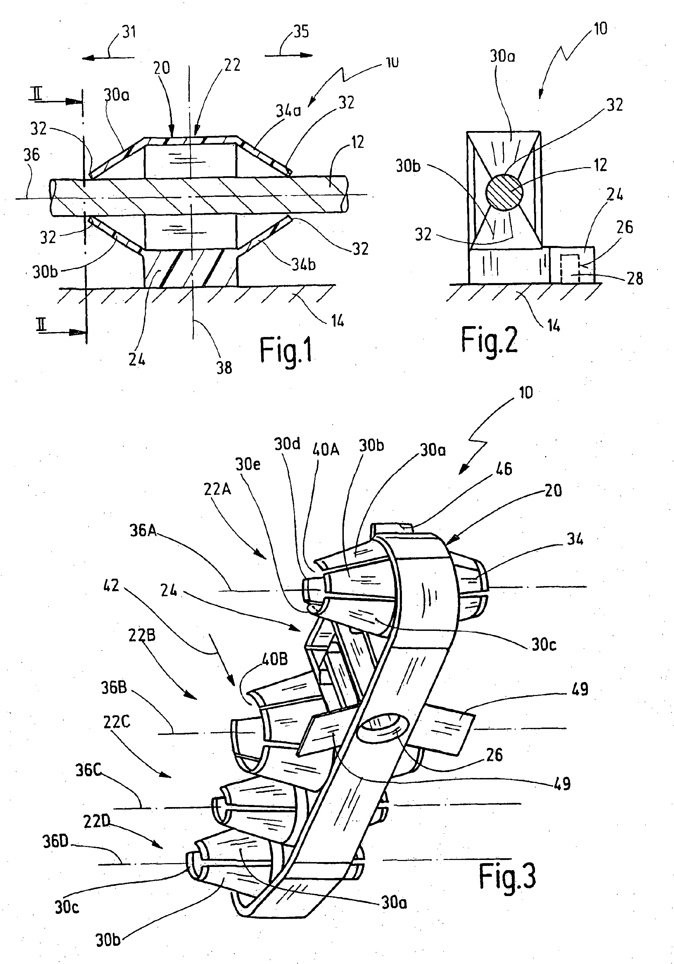

In Figs. 1 and 2, a first embodiment of a clip not forming part of the invention is designated in general terms by 10.

The clip 10 serves for fastening an elongate article, such as a tube, a line or the like, on a workpiece 14, for example a bodywork panel of a motor vehicle.

The clip 10 has a basic body 20 made of a relatively hard, preferably thermoplastic material. The basic body 20 contains an accommodating portion 22 for accommodating the article 12. The basic body 20 also has a fastening portion 24, by means of which the basic body 20 can be fastened on the workpiece 14.

In the present case, the fastening portion 24 has provided on it a stud holder 26 which can be pushed onto a stud 28 which is secured on the workpiece 14. The stud 28 may be secured on the workpiece 14, for example, by stud welding or by adhesive bonding. If the workpiece 14 contains a thermoplastic material, the stud 26 and the workpiece 14 may also be connected to one another by thermoplastic welding.

Of course, it is possible for the stud 28 to be provided with latching depressions along its outer circumference and for suitable latching means to be formed on the stud holder 26 in order for the clip 10 to be secured with latching action on the stud 28. As an alternative to this, the stud 28 may also have a thread in order for the clip 10 to be secured or screwed on or the like.

The basic body 20 also has two first tongues 30a, 30b which extend from the accommodating portion 22 in a longitudinal direction 31. The tongues 30a, 30b here taper conically towards one another, in which case the ends 32 of the tongues 30a, 30b are in contact with, and retain, the article 12.

The basic body 20 also has two second tongues 34a, 34b which extend from the accommodating portion 22 in the opposite longitudinal direction 35. The second tongues 34a, 34b also taper conically towards one another. The tongues 30, 34 are designed to be elastically deformable in the radial direction. Consequently, as is shown, in particular, in Fig. 1, the article is retained by the ends 32 of the first tongues 30 and by the ends 32 of the second tongues 34. In the region therebetween, the article 12 is not in contact with the basic body 20, in particular the accommodating portion 22.

The clip 10 may be designed in the region of its accommodating portion 22, and in respect of the abovedescribed tongues 30, 34, symmetrically in relation to a mirror plane 38, which is oriented perpendicularly to a longitudinal axis 36 of the article 12.

Consequently, the article 12 is retained on the clip 10 at points which are spaced far apart from one another in the axial direction. This results in the article being secured with a high level of stability on the clip 10. On the other hand, the article 12 is mounted on the clip 10 exclusively via the tongues 30, 34, which are designed to be elastically deformable in the radial direction. Consequently, oscillations or vibrations of the article 12 are not transmitted to the basic body 20, or at least are damped to a sufficient extent. The clip 10, including the tongues 30, 34, is formed in one piece and from a single material, such as a thermoplastic material.

Of course, in modifications of the embodiment shown, the basic body 20 may have a plurality of accommodating portions 22 with respective tongues 30, 34 and/or a plurality of fastening portions 24.

The subsequent figures, Fig. 3 to 9, show further embodiments of clips not forming part of the invention. Each generally correspond, in respect of construction and functioning, to the clip which is shown in Figs. 1 and 2. The same elements are therefore provided with the same designations. It is only the differences which will be explained hereinbelow.

The clip 10 which is shown in Fig. 3 to 6 has a central fastening portion 24. A first accommodating portion 22A is located on one side of the fastening portion 24 (as seen in a direction perpendicular to the longitudinal axis 36). Three accommodating portions 22B, 22C, 22D arranged one beside the other are located on the other side of the fastening portion 24. Consequently, the clip 10 is designed for accommodating four articles (not illustrated in the figures).

The first accommodating portion 22A and the second accommodating portion 22B each have five first tongues 30a to 30e and a corresponding number of second tongues 34.

The accommodating portions 22C, 22D each have three first tongues 30a, 30b, 30c and a corresponding number of second tongues 34.

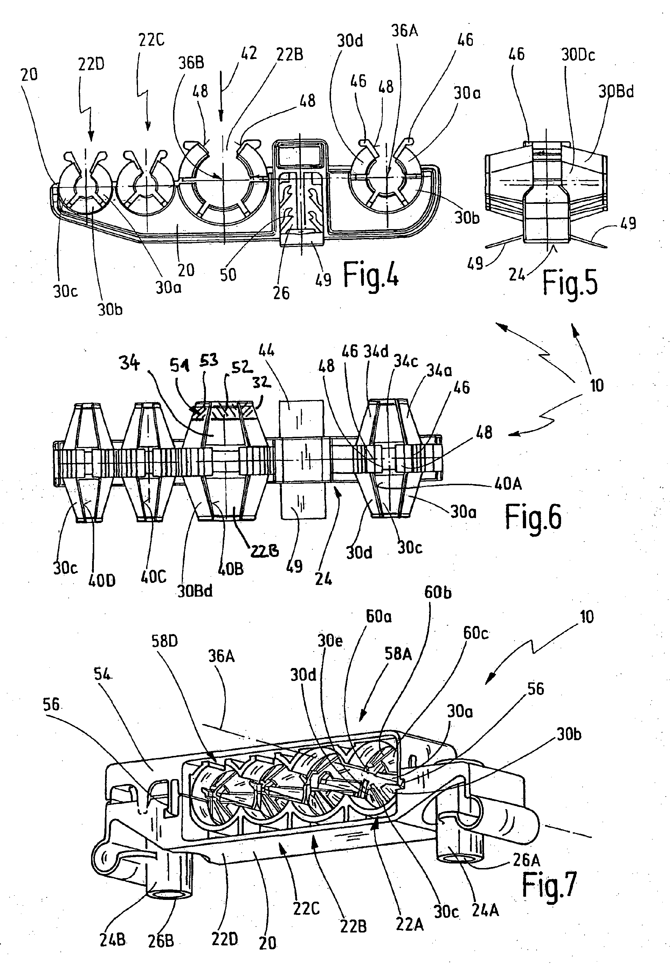

Each of the accommodating portions 22A to 22D also have a radial opening 40, via which an article 12 can be introduced radially into the respective accommodating portion 22. This can be seen, in particular, in Figs 4 and 6. The introduction direction is designated 42 there. The accommodating portions 22 can be widened in the radial direction in each case, and an article can therefore be clipped into the respective accommodating portion 22 in the introduction direction 42.

In order for the article 12 to be introduced more easily into the respective accommodating portion 22, the accommodating portions 22 each have, in the region of their radial openings 40 in each case, introduction noses 46 which define radially obliquely outwardly widening introduction slopes 48. The respective accommodating portion 22 can be widened radially in the region of its radial opening 40 via the introduction slopes 48 by the article 12 forcing the introduction noses 46 apart from one another in the radial direction until they engage with clipping action behind the article.

It is generally conceivable for the articles to be fixed definitively in this way in the accommodating portions 22. However, the basic body 20 is preferably assigned a cover 54 which has a closure portion which closes the respective radial openings 40 in order, on the one hand, to secure the article 12 in captive fashion on the clip 10 and, on the other hand, to force it into a predefined position within the accommodating portion 22.

Such an embodiment with a cover will be described hereinbelow with reference to Figs. 7 to 9.

In the case of the clip 10 in Figs. 3 to 6, the fastening portion 24 has two bracing tongues 49 which project in the longitudinal direction on opposite sides of the stud holder 26. These bracing tongues force the basic body 20 away from the workpiece 14 in order thus to set up secure latching engagements between a circumferential contour of the stud 28 and latching noses 50 which are provided on the inner circumference of the stud holder 26 (see Fig. 4).

As is schematically shown in Fig. 6, a rubber-type material 51 can be applied to an end 32 of at least one of the tongues shown in an exemplary manner for second tongues 34. In particular, the tongues 34 are provided at their ends with a rubber-type material 51, so that an inner retaining surface of the tongues 34 is provided with an inner coating 52. The inner coating 52 would be sufficient in order to increase a friction coefficient between the coated retaining surface and an article accommodated in the accommodating portion 22. In the present example, the rubber-type material 51 is applied by dipping the ends 32 of the tongues 34 into a low viscosity rubber-type material, so that also the outer surfaces of the tongues are covered by an outer coating 53, or by pipetting the material onto those ends. In the latter case it is also possible to apply the material the inner surfaces only. Preferably, rubber-type material 51 is applied to each of the ends of each of the tongues 30, 34 of the clip 10.

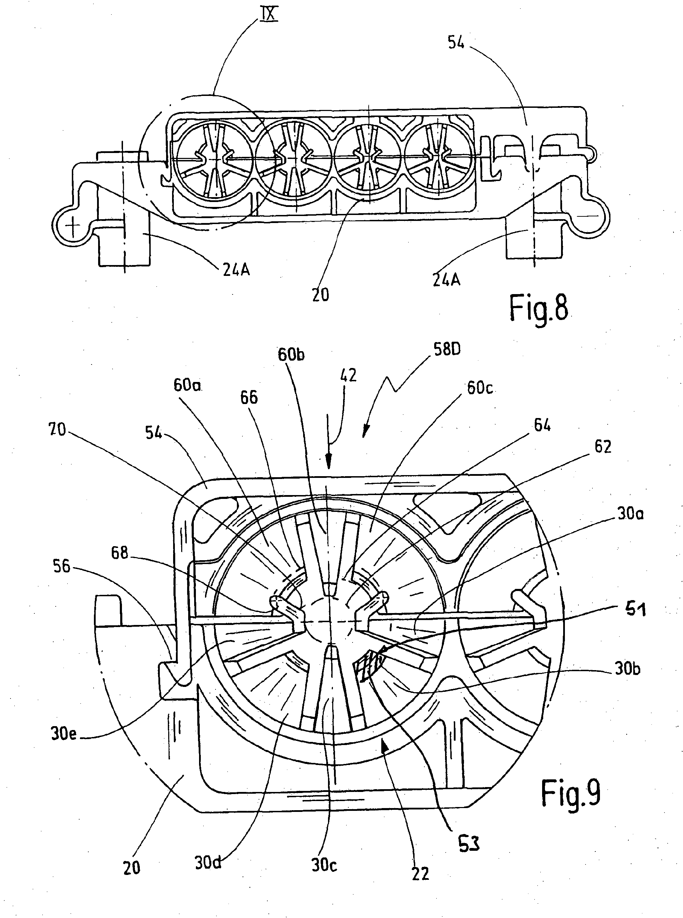

Figs. 7 to 9 show a further embodiment of a clip 10. The clip 10 in Fig. 7 to 9 has two fastening portions 24, between which four accommodating portions 22A to 22D are formed. As seen in the front plan view in each case, the accommodating portions 22 are of semicircular design and each have five first tongues 30a to 30e (see, in particular, Fig. 9). Furthermore, the clip 10 has a cover 54, which can be latched to the basic body 20 in a closing position via schematically indicated latching means 56.

In a manner corresponding to the accommodating portions 22, the cover 54 has four closure devices 58, which are intended to complete the accommodating portions 22. Although the closure devices 58 in other embodiments may be designed merely to close a respective radial opening 40 of an associated accommodating portion 22, each closure device 58 here complements the associated accommodating portion 22. More precisely, the cover 54 has first clip tongues 60 which extend from the closure device 58 in the same way as the first tongues 30 extend from the accommodating portion 22. In addition, as seen in the plan view from the front, the closure devices 58 are of semicircular design in each case and, as can be seen, in particular, in Fig. 9, form, together with the associated accommodating portion 22, a circular holder for a respective article 12.

Although not illustrated in Fig. 7 to 9, it goes without saying that the cover 54, in a manner corresponding to the first clip tongues 60, also has second clip tongues which correspond to the second tongues 34 which extend from the associated accommodating portion 22.

It can be seen in Fig. 9 that the tongues 30, 60 are of different lengths. The tongues 30a, 30c, 30e and 60b here are longer than the tongues 30b, 30d, 60a, 60c. If the tongues 30, 60 extend at the same cone angle, the longer tongues 30, 60, in a state in which they are not deformed in the radial direction, consequently define a first diameter 62, which is smaller than a second diameter 64 defined by the shorter tongues 30b, 30d, 60a, 60c.

Fig. 9 also shows a third diameter 66, which may correspond, for example, to the diameter of an article 12 which has been introduced. This third diameter 66 is generally larger than the first and the second diameters 62, 64.

The third diameter 66, however, is smaller than an introduction opening defined by two introduction noses 68, it being the case here that the introduction noses 68 are formed at the ends of the tongues 30a, 30e. There is no need, in the case of this embodiment, for introduction noses 46 in the region of the accommodating portion 22.

The introduction noses 68 form introduction slopes 70 via which the tongues 30a, 30e can be deflected radially when an article 12 is introduced. Provision may be made here for the tongues 30a, 30e, in the end, to engage at least partially behind the article. This makes it possible for the article to be secured temporarily on the accommodating portion 22 until, finally, the cover 54 is placed in position on the basic body 20.

The longer tongues 30a, 30c, 30e, 60b here act axially on a different location of the article 12 than the shorter tongues. This makes it possible to define an even more stable position of the article within the clip 10.

In Fig. 9, it is shown that a tongue 30b is provided with a rubber-type material 51 at an end thereof. Preferably, each of the tongues is provided with such rubber-type material 51. In Fig. 9, only an outer coating 53 can be seen, wherein, however, an inner coating 52 is applied to an inner surface of the tongues, in a manner similar to the inner coating 52 of Fig. 6.

## Claims

1. Clip (10) for fastening an article (12) on a workpiece (14), having a basic body (20) which is made of a relatively hard plastic material and has an accommodating portion (22), in which the article (12) can be accommodated along a longitudinal axis (36), and a fastening portion (24), by means of which the basic body (20) can be fastened on the workpiece (14), and having means for damping the transmission of vibrations between the article (12) and the basic body (20), wherein the vibration-damping means have at least two first tongues (30) which extend from the accommodating portion (22) in a longitudinal direction (31), taper conically towards one another and are designed to be elastically deformable in the radial direction such that the accommodated article (12) is retained by ends (32) of the tongues (30) wherein the accommodating portion (22) has a radial opening (40) for the radial introduction of the article (12), **characterized in that** at least one tongue (30a, 30e), adjacent to the radial opening (40), has an introduction slope (70).

2. Clip according to Claim 1, **characterized in that** the vibration-damping means have at least two second tongues (34) which extend from the accommodating portion (22) in the opposite longitudinal direction (35), taper conically towards one another and are designed to be elastically deformable in the radial direction such that the article (12) is retained by ends (32) of the first and of the second tongues (30, 34).

3. Clip according to Claim 1 or 2, **characterized in that** the tongues (30, 34) are formed integrally with the basic body (20).

4. Clip according to one of Claims 1 to 3, **characterized in that** the accommodating portion (22) is designed such that it can be widened elastically in the region of the radial opening (40).

5. Clip according to Claim 4, **characterized in that** the accommodating portion (22) has at least one introduction slope (48) in the region of a periphery of the radial opening (40).

6. Clip according to one of Claims 1-5, **characterized in that** the introduction slope (70) is arranged at the end of the tongue (30a, 30e).

7. Clip according to one of Claims 1-6, **characterized in that** the tongue (30a, 30e), on which the introduction slope (70) is formed, is longer than the other tongue(s).

8. Clip according to one of Claims 1 to 7, **characterized in that** the clip (10) has a cover (54), which can be connected to the basic body (20).

9. Clip according to Claim 8, **characterized in that** the cover (54) has a closure portion (58) for closing a radial opening (40) of the accommodating portion (22).

10. Clip according to Claim 9, **characterized in that** at least one clip tongue (60) extends in the longitudinal direction from the closure portion (58) such that the article (12) is retained by ends of the first tongue(s) (30) and of the clip tongue (60).

11. Clip according to one of Claims 8 to 10, **characterized in that** the cover (54) can be connected to the basic body (20) via latching means (56).

12. Clip according to one of Claims 1 to 11, **characterized in that** the fastening portion (24) has a stud holder (26) for securing the basic body (20) on a stud (22) which projects in relation to a surface of the workpiece (14).

13. Clip according to any of claims 1 to 12, for fastening an article (12) on a workpiece (14), having a basic body (20) which is made of a relatively hard plastic material and has an accommodating portion (22), in which the article (12) can be accommodated along a longitudinal axis (36), and a fastening portion (24), by means of which the basic body (20) can be fastened on the workpiece (14), **characterized in that** a retaining surface of the accommodating portion (22) is at least partially coated with a rubber-type material (51).

14. Clip according to claim 13, **characterized in that** the rubber-type material (51) is applied to an end (32) of at least one of the tongues (30).

15. Clip according to claim 13 or 14, **characterized in that** the rubber-type material (51) is applied by dipping or by spraying or by depositing a dose of the rubber-type material with a pipette.

## Patentansprüche

1. Clip (10) zur Befestigung eines Gegenstandes (12) an einem Werkstück (14), mit einem Grundkörper (20) aus einem relativ harten Kunststoffmaterial, der einen Aufnahmeabschnitt (22), in dem der Gegenstand (12) entlang einer Längsachse (36) aufnehmbar ist, und einen Befestigungsabschnitt (24) aufweist, mittels dessen der Grundkörper (20) an dem Werkstück (14) befestigbar ist, und mit Mitteln zum Dämpfen der Übertragung von Vibrationen zwischen dem Gegenstand (12) und dem Grundkörper (20), wobei die Vibrationsdämpfungsmittel wenigstens zwei erste Zungen (30) aufweisen, die sich von dem Aufnahmeabschnitt (22) in einer Längsrichtung (31) erstrecken, konisch aufeinander zu laufen und in radialer Richtung elastisch verformbar ausgebildet sind, derart, dass der aufgenommene Gegenstand (12) von Enden (32) der Zungen (30) gehalten wird, wobei der Aufnahmeabschnitt (22) eine radiale Öffnung (40) zum radialen Einführen des Gegenstandes (12) aufweist,
**dadurch gekennzeichnet, dass** wenigstens eine Zunge (30a, 30e), die benachbart ist zu der radialen Öffnung (40), eine Einführschräge (70) aufweist.

2. Clip nach Anspruch 1, **dadurch gekennzeichnet, dass** die Vibrationsdämpfungsmittel wenigstens zwei zweite Zungen (34) aufweisen, die sich von dem Aufnahmeabschnitt (22) in der entgegengesetzten Längsrichtung (35) erstrecken, konisch aufeinander zu laufen und in radialer Richtung elastisch verformbar ausgebildet sind, derart, dass der Gegenstand (12) von Enden (32) der ersten und der zweiten Zungen (30, 34) gehalten wird.

3. Clip nach Anspruch 1 oder 2, **dadurch gekennzeichnet, dass** die Zungen (30, 34) einstückig mit dem Grundkörper (20) ausgebildet sind.

4. Clip nach einem der Ansprüche 1 bis 3, **dadurch gekennzeichnet, dass** der Aufnahmeabschnitt (22) im Bereich der radialen Öffnung (40) elastisch aufweitbar ausgebildet ist.

5. Clip nach Anspruch 4, **dadurch gekennzeichnet, dass** der Aufnahmeabschnitt (22) im Bereich eines Randes der radialen Öffnung (40) wenigstens eine Einführschräge (48) aufweist.

6. Clip nach einem der Ansprüche 1 bis 5, **dadurch gekennzeichnet, dass** die Einführschräge (70) am Ende der Zunge (30a, 30e) angeordnet ist.

7. Clip nach einem der Ansprüche 1 bis 6, **dadurch gekennzeichnet, dass** die Zunge (30a, 30e), an der die Einführschräge (70) ausgebildet ist, länger ist als die andere(n) Zunge(n).

8. Clip nach einem der Ansprüche 1 bis 7, **dadurch gekennzeichnet, dass** der Clip (10) einen Deckel (54) aufweist, der mit dem Grundkörper (20) verbindbar ist.

9. Clip nach Anspruch 8, **dadurch gekennzeichnet, dass** der Deckel (54) einen Verschlussabschnitt (58) zum Verschließen einer radialen Öffnung (40) des Aufnahmeabschnittes (22) aufweist.

10. Clip nach Anspruch 9, **dadurch gekennzeichnet, dass** sich von dem Verschlussabschnitt (58) wenigstens eine Clipzunge (60) in Längsrichtung erstreckt, derart, dass der Gegenstand (12) von Enden der ersten Zunge(n) (30) und der Clipzunge (60) gehalten wird.

11. Clip nach einem der Ansprüche 8 bis 10, **dadurch gekennzeichnet, dass** der Deckel (54) über Rastmittel (56) mit dem Grundkörper (20) verbindbar ist.

12. Clip nach einem der Ansprüche 1 bis 11, **dadurch gekennzeichnet, dass** der Befestigungsabschnitt (24) eine Bolzenaufnahme (26) zur Festlegung des Grundkörpers (20) an einem Bolzen (22) aufweist, der gegenüber einer Oberfläche des Werkstückes (14) vorsteht.

13. Clip nach einem der Ansprüche 1 bis 12, zur Befestigung eines Gegenstandes (12) an einem Werkstück (14), mit einem Grundkörper (20) aus einem relativ harten Kunststoffmaterial, der einen Aufnahmeabschnitt (22), in dem der Gegenstand (12) entlang einer Längsachse (36) aufnehmbar ist, und einen Befestigungsabschnitt (24) aufweist, mittels dessen der Grundkörper (20) an dem Werkstück (14) befestigbar ist, **dadurch gekennzeichnet, dass** eine Haltefläche des Aufnahmeabschnittes (22) wenigstens teilweise mit einem gummiartigen Material (51) beschichtet ist.

14. Clip nach Anspruch 13, **dadurch gekennzeichnet, dass** das gummiartige Material (51) auf ein Ende (32) von wenigstens einer der Zungen (30) aufgebracht ist.

15. Clip nach Anspruch 13 oder 14, **dadurch gekennzeichnet, dass** das gummiartige Material (51) durch Tauchen oder Sprühen, oder durch Absetzen einer Dosis des gummiartigen Materials (51) mit einer Pipette, aufgebracht ist.

## Revendications

1. Agrafe (10) pour attacher un article (12) sur une pièce (14), comprenant un corps de base (20) qui est constitué d'une matière plastique relativement dure et comprend une partie de réception (22), dans laquelle l'article (12) peut être reçu le long d'un axe longitudinal (36), et une partie de fixation (24) au moyen de laquelle le corps de base (20) peut être attaché sur la pièce (14), et comprenant des moyens pour amortir la transmission de vibrations entre l'article (12) et le corps de base (20), dans laquelle les moyens d'amortissement de vibrations comprennent au moins deux premières languettes (30) qui s'étendent à partir de la partie de réception (22) dans une direction longitudinale (31), s'amincissent de façon conique en direction l'une de l'autre et sont conçues de manière à être élastiquement déformables dans la direction radiale de telle sorte que l'article reçu (12) soit retenu par des extrémités (32) des languettes (30), dans laquelle la partie de réception (22) comporte une ouverture radiale (40) pour l'introduction radiale de l'article (12), **caractérisée en ce qu'**au moins une languette (30a, 30e), à proximité de l'ouverture radiale (40), présente une pente d'introduction (70).

2. Agrafe selon la revendication 1, **caractérisée en ce que** les moyens d'amortissement de vibrations comprennent au moins deux deuxièmes languettes (34) qui s'étendent à partir de la partie de réception (22) dans la direction longitudinale opposée (35), s'amincissent de façon conique en direction l'une de l'autre et sont conçues de manière à être élastiquement déformables dans la direction radiale, de telle sorte que l'article (12) soit retenu par des extrémités (32) des premières et deuxièmes languettes (30,34).

3. Agrafe selon la revendication 1 ou 2, caractérisée en ce les languettes (30, 34) sont formées intégralement avec le corps de base (20).

4. Agrafe selon l'une quelconque des revendications 1 à 3, **caractérisée en ce que** la partie de réception (22) est conçue de telle sorte qu'elle puisse être élargie élastiquement dans la région de l'ouverture radiale (40).

5. Agrafe selon la revendication 4, **caractérisée en ce que** la partie de réception (22) présente au moins une pente d'introduction (48) dans la région d'une périphérie de l'ouverture radiale (40).

6. Agrafe selon l'une quelconque des revendications 1 à 5, **caractérisée en ce que** la pente d'introduction (70) est agencée à l'extrémité de la languette (30a, 30e).

7. Agrafe selon l'une quelconque des revendications 1 à 6, **caractérisée en ce que** la languette (30a, 30e), sur laquelle la pente d'introduction (70) est formée, est plus longue que l'autre ou les autres languette(s).

8. Agrafe selon l'une quelconque des revendications 1 à 7, **caractérisée en ce que** l'agrafe (10) comprend une coiffe (54) qui peut être connectée au corps de base (20).

9. Agrafe selon la revendication 8, **caractérisée en ce que** la coiffe (54) comprend une partie de fermeture (58) pour fermer une ouverture radiale (40) de la partie de réception (22).

10. Agrafe selon la revendication 9, **caractérisée en ce qu'**au moins une languette d'agrafe (60) s'étend dans la direction longitudinale à partir de la partie de fermeture (58) de telle sorte que l'article (12) soit retenu par des extrémités de la (des) première(s) languette(s) (30) et de la languette d'agrafe (60).

11. Agrafe selon l'une quelconque des revendications 8 à 10, **caractérisée en ce que** la coiffe (54) peut être connectée au corps de base (20) par l'intermédiaire de moyens de verrouillage (56).

12. Agrafe selon l'une quelconque des revendications 1 à 11, **caractérisée en ce que** la partie de fixation (24) comprend un porte-goujon (26) pour fixer le corps de base (20) sur un goujon (22) qui fait saillie par rapport à une surface de la pièce (14).

13. Agrafe selon l'une quelconque des revendications 1 à 12, pour attacher un article (12) sur une pièce (14), comprenant un corps de base (20) qui est constitué d'une matière plastique relativement dure et comprend une partie de réception (22), dans laquelle l'article (12) peut être reçu le long d'un axe longitudinal (36), et une partie de fixation (24) au moyen de laquelle le corps de base (20) peut être attaché sur la pièce (14), **caractérisée en ce qu'**une surface de retenue de la partie de réception (22) est au moins partiellement revêtue d'une matière de type caoutchouc (51).

14. Agrafe selon la revendication 13, **caractérisée en ce que** la matière de type caoutchouc (51) est appliquée à une extrémité (32) d'au moins une des languettes (30).

15. Agrafe selon la revendication 13 ou 14, **caractérisée en ce que** la matière de type caoutchouc (51) est appliquée par trempé ou pulvérisation ou dépôt d'une dose de la matière de type caoutchouc à l'aide d'une pipette.
